# EUROPEAN PATENT APPLICATION

(11) **EP 0 947 728 A1**
(43) Date of publication of application: **06.10.1999**
(21) Application number: 99200989.4
(22) Date of filing: 29.03.1999
(51) Int. Cl.: F16G 13/16

(54) **Cable holding chain link with hinged crossbar**

(30) Priority: 31.03.1998 IT MI980677
(71) Applicant: Mauri, Giovanni, I-20052 Monza Milano (IT)
(72) Inventor: Mauri, Giovanni, I-20052 Monza Milano (IT)
(74) Representative: Riccardi, Sergio

(57) **Abstract**

A chain link (10) having a crossbar (16) hinged to a flank (12) having features of strength and functionality quite superior to prior art links is disclosed. At least one of the link flanks (12) of the invention comprises a circular pin (18), horizontally arranged at a generally central upper and/or lower part of the flank (12). At least one link crossbar (16) is so shaped as to be hingedly connected to the flank (12) provided with the pin (18). For this purpose said crossbar comprises a concave hook (30) having the shape of an U or upturned U at one of its ends. The connection between said concave hook (30) and said pin (18) preferably is effected by a light pressure and after the connection the crossbar (16) is rotated by a suitable angle so that the crossbar (16) when in use cannot be disassembled from the chain link (10).

## Description

The present invention relates to the so-called cable holding chains and more particularly a link element of said chains provided with a crossbar hinged at one side and having superior features of strength and functions in comparison with the prior art chain links.

It is known that a cable holding chain is adapted to support flexible ducts, namely service lines to an apparatus and having a rotary or alternate linear motion. These chains comprise a plurality of mutually pivoted links so as to form a sort of mobile channel in which said ducts are arranged.

One link generally consists of two flanks and a couple of crossbars connecting said flanks at the top and the bottom, respectively. Each flank in the direction of movement of the chain has a male and a female shaped end for the connection with the complementary ends of the adjacent links so as to allow their mutually pivotal movement.

Several systems were proposed to connect the crossbars to the flanks but none of these systems resulted to be wholly efficient as to structure, easy engagement and disengagement or from an economic point of view.

Additionally, it is often necessary to have access to the flexible ducts arranged inside the chain without removing the crossbar and for this purpose various systems of connection between crossbar and flanks are known, but again these known systems did not result to be sufficiently strong and functional. In order to obtain a strong connection between crossbar and flank, technicians skilled in this art generally chose complex solutions or systems requiring a considerable pressing force to be exerted on the crossbar and/or the flank.

The object of the present invention is to make a cable holding chain link easy to be manufactured and assembled, compact to be stored and allowing to open hingedly at least one crossbar so as to give access to the ducts arranged inside the chain.

These and other objects are brilliantly achieved by a cable holding chain link according to claim 1, a flank according to claim 8, a crossbar according to claim 11 and a chain according to claim 14. The method of assembling a link according to the invention comprises the steps recited in claim 16. Further features of the invention are indicated in the dependent claims.

To sum up, at least one of the link flanks comprises a hinge pin with a circular cross-section, generally arranged horizontally at a substantially central upper and/or lower part of the flank. At least one link crossbar has a general shape of a flat plate adapted to be engaged like a hinge with the at least one flank provided with the hinge pin. To this purpose said crossbar comprises at one of its ends, a concave hook shaped like a U or an upturned U. The engagement of the concave hook with the hinge pin is preferably made with a light pressure and then the crossbar is turned at such an angle as to hinder disengagement of the crossbar from the link in operation.

A detailed description of the invention now follows, given as an explanatory non-limiting example, to be read in connection with the accompanying sheets of illustrative drawings in which:
Figure 1 shows a chain link having a fixed bottom crossbar and the other crossbar hinged by a system according to the present invention;
Figure 2 is a top plan view of a chain flank provided with two hinge pins;
Figure 3 is a longitudinal cross-sectional view of a crossbar with two hooks for engaging two corresponding flank hinge pins;
Figure 4 is a bottom plan view of the crossbar of Figure 3;
Figure 5 is a cross-sectional view of the link of Figure 1 with engaged hinged crossbar;
Figure 6 is a longitudinal cross-sectional view of the crossbar being an element of the chain link of Figure 1;
Figure 7 is a top plan view of the crossbar of Figure 6;
Figure 8 is a plan view of a chain link lying flat on a plane, with two detachable changed hinged crossbars; and
Figure 9 is a partial sectional view of a concave hook.

Clearly like reference numerals in the various figures of the drawings relate to similar or functional equivalent parts.

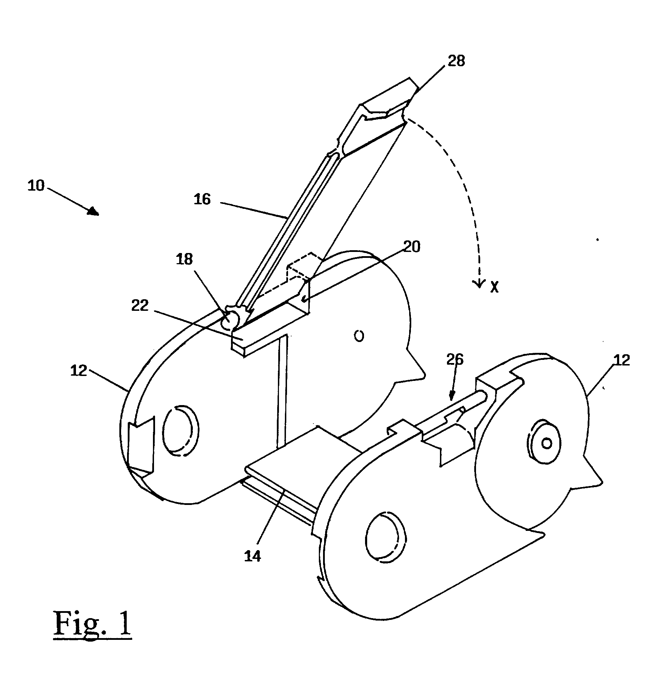

Figure 1 shows in an isometric view, a link 10 provided with a system of hinged engagement between a crossbar 16 and a flank 12 according to the invention. The link 10 comprises a couple of flanks 12 and a fixed bottom crossbar 14. It is now to be pointed out that the shape of the flanks 12 is not a part of the invention, in other words the connection between flanks is irrelevant and the illustrative shape shall not be considered as limiting the invention. The invention could even be applied to chain links having only one flank with the other flank replaced by a simple bar at right angles with the crossbar. Thus a reference to chain links with two actual flanks is being made only for convenience and simplicity of description.

Referring again to Figure 1, one of the flanks 12, e.g. the left one in the drawing, in its substantially central upper part has a hinge pin 18 extending horizontally between two vertical walls 20 defining a window 24 together with a horizontal wall 22. The hinge pin 18 has a circular cross-section and is arranged at a suitable distance from the horizontal wall 22 of the window 24. The other flank 12 at the part corresponding to the above-mentioned hinge pin, is provided with an engagement rod 26 of known type which is not a part of the invention and is adapted to be mutually coupled with a corresponding complementary engaging protrusion 28 of the hinged crossbar 16.

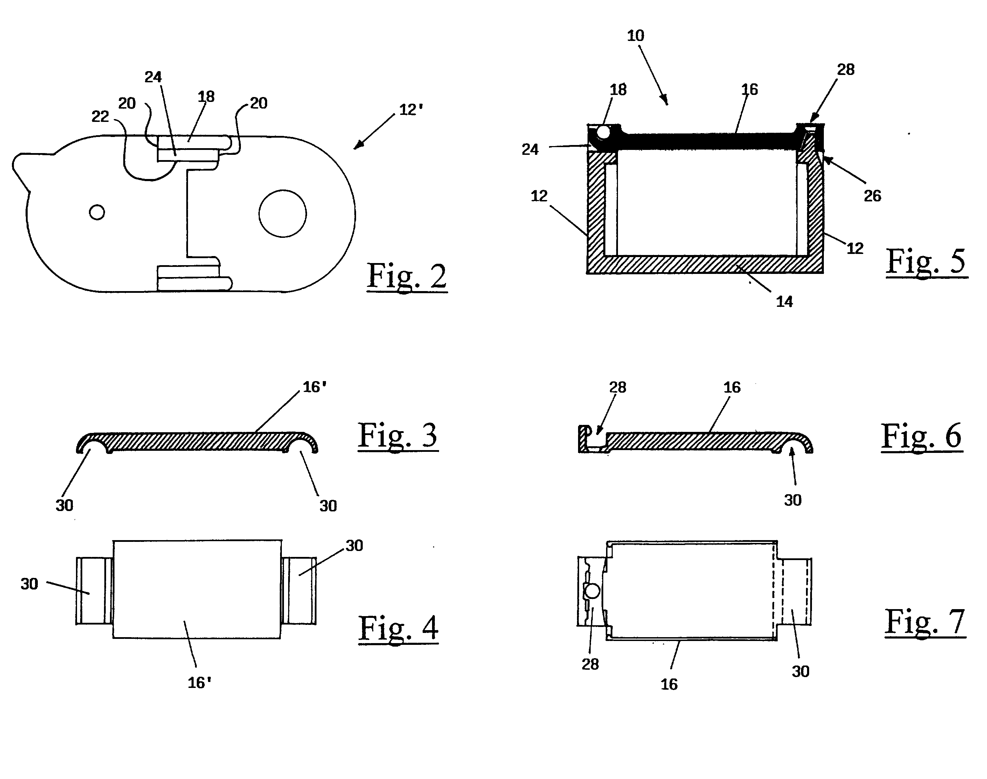

The other end of the hinged crossbar 16 to be engaged by the hinge pin 18 is provided with a concave hook 30 having a semicircular, U-like or upturned U shape (see Figures 5 and 7). The diameter of the concave hook 30 substantially corresponds to that of the hinge pin 18 and the thickness of the crossbar 16 at the bottom of the concave hook 30 preferably corresponds to the distance between the hinge pin 18 and the window horizontal wall 22.

The hinged engagement between the crossbar 16 and the corresponding flank 12, again referring to Figures 1, 5 and 6, is effected by taking the crossbar 16 as shown in Figure 6 and pressing so as to match the concave hook 30 with the hinge pin 18. It is to be noted that at this stage the crossbar 16 protrudes to the left from the outline of the chain link.

Preferably the engagement between the concave hook 30 and the hinge pin 18 occurs with the crossbar protruding horizontally outside the link but it is not excluded, also depending upon the chosen tolerances, that the hook 30 may engage the hinge pin 18 when the crossbar is in a position other than the horizontal one, ranging from the vertical one (prior art connection 28 upwards) to that with crossbar making an angle of about 45 degrees (prior connection 28 downwards).

The subsequent step, after the engagement between hinge pin 18 and concave hook 30, provides for a rotation of the crossbar of a suitable angle (arrow X) so as to bring the crossbar to a substantially horizontal position as shown in Figure 5. In such a position it will be impossible to open the crossbar 16 where it is hooked with the hinge pin. On the contrary it is possible to open the crossbar by disengaging it at the prior art connection 26, 28 and raising it in a direction opposite to the arrow X so as to have access to the ducts (not shown) arranged inside the cable holding chain.

As an alternative to the fixed bottom crossbar 14 as shown in Figure 1, it is possible to use a crossbar 16 or 16' shown in Figure 3 and 4 and in this case the left flank 12 of Figure 1 should be replaced by a flank 12' shown in Figure 2, provided with two hinge pins 18. In such a case the crossbar 16' of Figure 3 is symmetrical and is provided with two concave hooks 30.

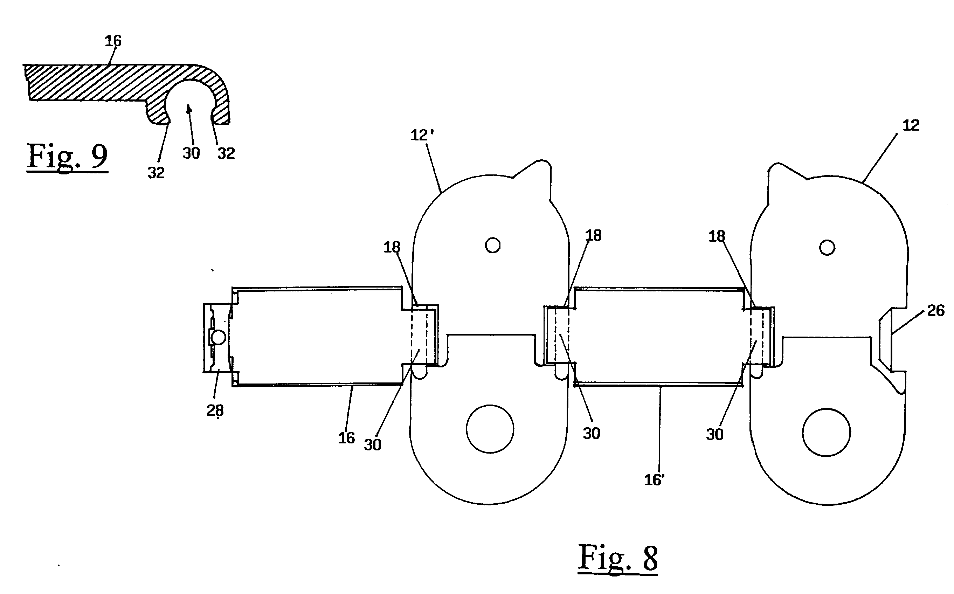

Figure 8 helps to understand how use of the crossbar 16' of Figures 3 and 4 and flank 12' of Figure 2 is particularly useful as to manufacture of the elements, easy assembling, economy and versatility. In a totally new manner the chain link or the whole chain may practically be assembled flat: a first flank 12' with two hinge pins 18 (left flank of Figure 8) and a second flank 12 with one hinge pin 18 and a prior art connection rod 26 are prepared; between the two flanks a crossbar 16' with two concave hooks 30 is placed, while an external crossbar 16 with one concave hook 30 and one known protrusion 28 is joined to the first flank 12'. A simple pressure exerted on the two members to be matched is sufficient to obtain the engagement between concave hook and pin and the assembling operation is completed by rotating the two flanks and the external crossbar by 90 degrees.

As shown in Figure 9, the U-shaped concave book 30 may be provided with two opposite protrusions 32 in order to obtain a still more efficient and secure connection.

It is to be understood that several modifications, additions, alterations, variations and substitutions of elements with functionally equivalent ones may be made to the embodiment above described in detail and illustrated in the drawings, without departing however from the scope of the invention as defined in the appended claims.

## Claims

1. Cable holding chain link comprising a flank to be coupled to an adjacent flank to form a chain, and a crossbar, characterized in that one of said flank and crossbar comprises a hinge pin and the other of said flank and crossbar comprises a concave hook substantially having a semicircular or U like shape.

2. Chain link according to Claim 1, characterized in that said flank comprises a hinge pin extending between two walls of a window and said crossbar comprises said concave hook at one of its ends.

3. Chain link according to Claim 2, characterized in that said window comprises a horizontal bottom wall spaced by a proper distance from said hinge pin and the thickness of said crossbar at the bottom of the concave hook substantially corresponds to said distance.

4. Chain link according to Claim 2 or 3, characterized in that said flank comprises a further hinge pin extending between two walls of another window.

5. Chain link according to any of Claims 2 to 4, characterized in that said crossbar comprises a further concave hook at its other end.

6. Chain link according to any of the preceding claims, characterized in that said hinge pin substantially has a circular cross-sectional shape.

7. Chain link according to any of the preceding claims, characterized in that said concave hook comprises at least an internally protruding projection.

8. Chain link flank comprising means for the mutual connection with a flank of an adjacent chain link, characterized by comprising at least one hinge pin generally extending parallel to the flank axis.

9. Chain link flank according to Claim 8, characterized in that said at least one hinge pin extends between two walls of a window made in a generally central position at the upper or lower edge of the flank.

10. Chain link flank according to either Claim 8 or 9, characterized in that said at least one hinge pin has a generally circular cross-sectional shape.

11. Chain link crossbar comprising a plate, characterized by comprising a concave hook at least at one end.

12. Crossbar according to claim 11, characterized in that said concave hook has a generally semicircular or U-like cross-sectional shape.

13. Crossbar according to either claim 11 or 12, characterized in that said concave hook comprises at least one internally protruding projection.

14. Cable holding chain characterized by comprising a plurality of chain links according to any of Claims 1 to 7.

15. Cable holding chain characterized by comprising a plurality of flanks according to any of Claims 8 to 10 and crossbars according to any of Claims 11 to 13.

16. Method of assembling a chain link according to any of Claims 1 to 7, comprising the steps of: a) providing at least one flank according to any of Claims 8 to 10; b) providing at least one crossbar according to any of Claims 11 to 13; c) juxtaposing said at least one flank to said at least one crossbar so that said at least one hinge pin corresponds to said concave hook; d) exerting a pressure on either said hinge pin or said concave hook in such a way to carry out their mutual connection; and e) effecting a mutual rotation of said crossbar in respect of said flank.

17. Method according to Claim 16, characterized in that the steps a) to d) are carried out with said flank and said crossbar substantially lying flat on a plane and said step e) of mutual rotation is effected for an angle of about 90 degrees.

18. Method according to Claim 16, characterized in that the step d) is carried out with said flank in a generally vertical position and said crossbar in a generally horizontal position and that said step e) of mutual rotation is effected for an angle of about 180 degrees.
